# EUROPÄISCHE PATENTSCHRIFT

(11) **EP 0 879 980 B1**
(45) Veröffentlichungstag und Bekanntmachung des Hinweises auf die Patenterteilung: **15.10.2003**
(21) Anmeldenummer: 98106918.0
(22) Anmeldetag: 16.04.1998
(51) Int. Cl.: F16L 19/10, F16L 33/22

(54) **Schlauchverschraubung**
Screw coupling for hoses
Raccord fileté pour tuyaux flexibles

(30) Priorität: 21.05.1997 DE 19721179
(43) Veröffentlichungstag der Anmeldung: 25.11.1998
(73) Patentinhaber: EM-Technik GmbH, D-67133 Maxdorf (DE)
(72) Erfinder: Meier, Michael, 67161 Gönnheim (DE)
(74) Vertreter: Zellentin, Wiger, Dipl.-Ing.

(56) Entgegenhaltungen:
- DE-A- 1 625 961
- DE-C- 956 554
- FR-A- 2 468 826
- US-A- 3 075 793

## Beschreibung

Die vorliegende Erfindung betrifft eine Schlauchverschraubung für insbesondere flexible Schläuche und starre Rohre. Die Verschraubung besteht dabei aus einem Verschraubungskörper mit einer an diesen angeformten Tülle, auf die der zu befestigende Schlauch geschoben wird. Der Schlauch ist dabei von einem Sicherungsring umfaßt, der von einer Überwurfmutter in einen der Tülle benachbarten konusförmigen Stutzen gedrückt wird und dadurch den Schlauch einklemmt, siehe z. B. DE 42 11 498 A1. Das hierzu verwendete Klemmelement kann dabei auch mehrteilig ausgebildet sein, so z. B. DE-OS 22 13 334 oder DE 956 554.

Es hat sich herausgestellt, daß eine derartige Verschraubung flexible und starre (Kunststoff-)Schläuche bei Raumtemperatur sehr sicher hält, daß jedoch bei hohen Temperaturen bis 180°C und darüber eine Lockerung des Verbundes auftritt, so daß die Schläuche sich unbeabsichtigt aus der Verschraubung lösen können. Insbesondere ist dies nach einigen Temperaturlastwechseln der Fall.

Die vorliegende Erfindung hat sich daher die Aufgabe gestellt, eine derartige Verschraubung dahingehend weiterzuentwickeln, daß sie auch bei höheren Temperaturen und auch nach einer Vielzahl von Temperaturwechseln den Schlauch sicher hält.

Die Lösung dieser Aufgabe gelingt mit Hilfe einer die Merkmale des Hauptanspruchs aufweisenden Schlauchverschraubung. Vorteilhafte Ausgestaltungen finden sich in den Unteransprüchen.

Durch die Teilung des Klemmkörpers wird erreicht, daß dessen Teile aus unterschiedlichen Materialien mit unterschiedlichen Festigkeitswerten ausgebildet werden können, d. h. die Aufgaben an die äußeren und inneren Klemmkörperbereiche können daher unterschiedlich sein.

Weiterhin hat sich überraschenderweise herausgestellt, daß nur eine im wesentlichen lineare, ringförmige Anlagekante zwischen dem oberen Stutzenrand und der äußeren Mantelfläche des inneren Konus eine verbesserte Klemmwirkung gewährleistet. Dabei liegt die Klemmkante des Stutzens vorzugsweise etwa mittig zur inneren Anlagefläche des inneren Klemmkörpers am Schlauch. Wie herkömmlich ist der Stutzen dabei vorzugsweise ebenfalls konisch ausgebildet, wodurch die Krafteinleitung in den Verschraubungskörper verbessert wird.

Der zweite äußere Klemmkörperteil weist eine nach innen zum Schlauch gerich-Der zweite äußere Klemmkörperteil weist eine nach innen zum Schlauch gerichtete Lippe auf, die sich an der Trichterfläche des inneren Klemmkörpers abstützt, so daß diese beim Aufschrauben der Überwurfmutter in das Schlauchmaterial eindringt. An die Lippe schließt sich daher ebenfalls ein Freiraum an.

Auf diese Weise ergibt sich sowohl eine Pressung des Schlauches durch den inneren Klemmkörper als auch ein Verkrallen mit den Befestigungsmitteln durch die Lippe des äußeren Klemmkörpers. Aus der Gesamtwirkung der linienförmigen Krafteinleitung in den inneren Klemmkörper zusammen und dem Verkrallen durch die Lippe ergibt sich ein schwingungs- und insbesondere temperaturunabhängiges Verhalten der Verschraubung.

Weiterhin hat sich herausgestellt, daß eine bestimmte unterschiedliche Werkstoffkombination für die inneren und äußeren Klemmkörper zusätzliche Festigkeitsvorteile bringt. Der äußere Klemmkörper besteht dabei aus Polyetheretherketon (PEEK) und der innere vorzugsweise aus Polytetrafluorethylen (PTFE).

Vorteilhaft ist weiterhin eine Auswahl und Kombination von Winkeln für den Stutzen, der insbesondere konisch ausgeführt ist und einen Öffnungswinkel α von etwa 25 - 35°, vorzugsweise von 30°, besitzt, wobei der innere Klemmkörper einen Mantelwinkel β von etwa 28 - 45°, vorzugsweise von 37°, aufweist.

Der innere Mantelkörper besitzt einen oberen (äußeren) Trichter, in den der zweite - äußere - Klemmkörper eingefügt wird, über den bei Krafteinwirkung durch die Überwurfmutter dessen Lippe axial eingeschnürt wird. Dieser Winkel y beträgt 85 bis 95°, vorzugsweise 90°. Ebenso schließt natürlich die Lippe einen äußeren Winkel von etwa 85 - 95°, vorzugsweise von 90°, ein, wobei der innere Schneidlippenwinkel 8 etwa 55 - 65°, vorzugsweise 60°, beträgt.

Die Lippe selbst ist vorzugsweise vom Klemmkörper abgeknickt ausgebildet, wobei die Innenfläche zylindrisch ausgebildet ist, so daß beim Einpressen die Innenfläche auch plan an den Schlauch anlegbar ist. Hierdurch ist insbesondere die Eindringtiefe der Lippe in den Schlauch begrenzbar, um diesen vor Zerstörung zu schützen, so daß dieser gleichsam als Endausschlag für die Überwurfmutter dient.

Anhand der bieliegenden Figuren wird die vorliegende Erfindung näher erläutert.

Dabei zeigen
- **Figur 1**: die Verschraubung in Explosionsdarstellung,
- **Figur 2**: den äußeren Klemmkörper und
- **Figur 3**: diese in zusammengebautem Zustand.

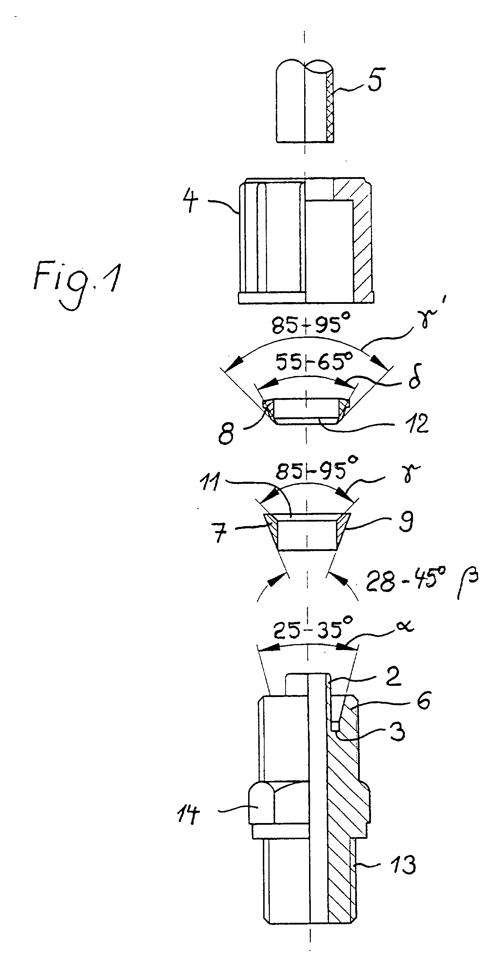

Figur 1 zeigt von oben beginnend den Schlauch 5 und darunter die Überwurfmutter 4 mit Innengewinde (nicht dargestellt). Darunter ist der äußere Klemmkörper 8 gezeigt, der unten die Lippe 12 trägt, die beim Verschrauben in das Schlauchmaterial eindringt.

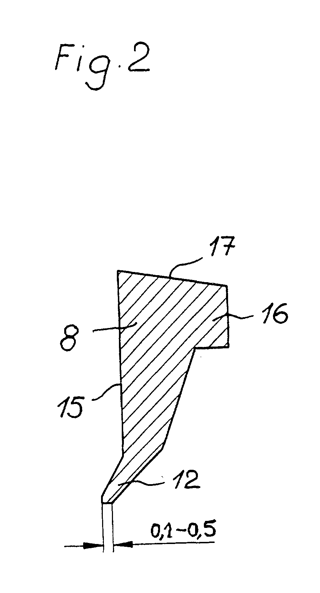

Der Querschnitt des äußeren Klemmkörpers 8 ist in Figur 2 vergrößert dargestellt. Dieser erste Klemmkörper 8 greift in den Trichter 11 des inneren Klemmkörpers 7 ein, der Trichterwinkel γ des inneren Klemmkörpers entspricht daher demjenigen γ' des äußeren Klemmkörpers und beträgt 85 - 95°. Die Schneidlippe 12 wird auf der Innenseite eingeschlossen durch den Lippenwinkel δ, dieser beträgt 55 - 65°. Die Lippe 12 ist vom Klemmkörper 8 abgeknickt ausgebildet.

Der Verschraubungskörper 1 besitzt eine Tülle 2, an die radial nach außen fußseitig eine Anschlagringfläche 3 anschließt. Der Schlauch 5 wird auf die Tülle 2 geschoben und liegt an der Anschlagringfläche 3 auf. An die Anschlagringfläche 3 schließt sich der Stutzen 6 an, der sich vorzugsweise (in der Darstellung) nach oben mit einem Öffnungswinkel α von 25 - 35° erweitert. Der Verschraubungskörper 1 besitzt ein Außengewinde 13 sowie einen Sechskant 14 zur Verschraubung mit einer Armatur. Er kann auch mit Innengewinde und entsprechendem Sechskant versehen sein.

**Figur 2** zeigt die besondere Form des äußeren (oberen) Klemmkörpers 8 aus PEEK. Dieser besitzt eine parallel zur Mittelachse der Verschraubung ausgerichtete Zylinderfläche 15, von der die in den Schlauch unter dessen elastischer Verformung eindringende Lippe 12 abgeknickt ist. Die entsprechenden Winkel sind in Figur 1 angegeben. Der obere Bereich des Klemmkörpers weist vorteilhaft einen Wulst 16 auf und besitzt eine Abschrägung 17, so daß auch in diesem Falle die Krafteinleitung durch die Überwurfmutter im wesentlichen linienförmig und definiert mit einem Vektor längs der Zylinderfläche 15 erfolgt.

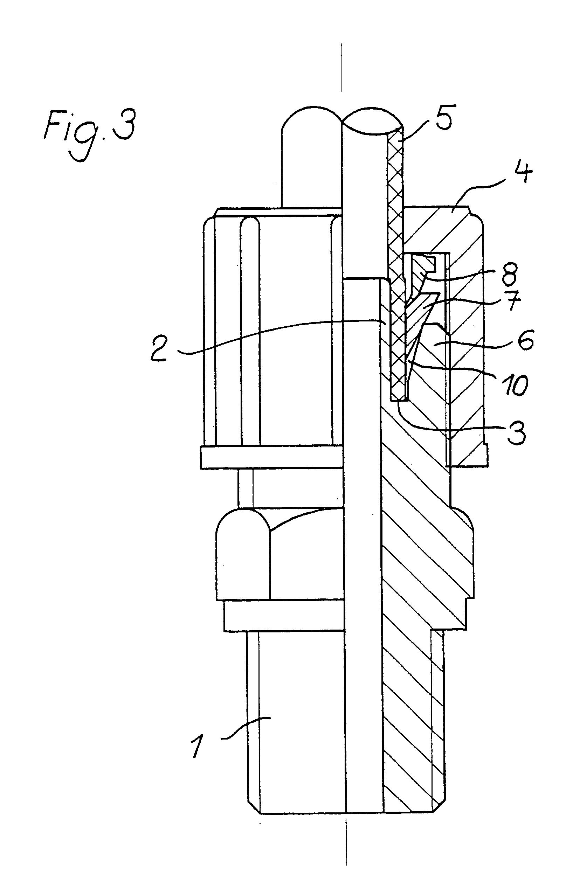

**Figur 3** veranschaulicht den Zusammenbau der Teile mit dem Verschraubungskörper 1. Der Schlauch 5 ist über die Tülle 2 bis an die Anschlagfläche 3 geschoben und durch die Verschraubung mit Hilfe der Überwurfmutter 4 und der Klemmkörper 7, 8 gesichert.

Durch die schräg verlaufende äußere Mantelfläche 9 des inneren Klemmkörpers 7 mit der davon abweichenden Schräge des Stutzens 6 entsteht ein Freiraum 10, d. h. die Oberkante des Stutzens 6 liegt linienförmig am Klemmkörper 7 an. Ebenso ruht die Überwurfmutter 4 kreislinienförmig auf dem oberen Klemmkörper 8. Durch die Kombination der erfindungsgemäßen Merkmale entsteht eine hochtemperaturfeste Verschraubung. Unter einem Druck von 6 bar entsteht auch bei häufigem Abkühlen bei 180°C keine Undichtigkeit.

### Bezugszeichenliste

- 1: Verschraubungskörper
- 2: Tülle
- 3: Anschlagringfläche
- 4: Überwurfmutter
- 5: Schlauch
- 6: Stutzen
- 7: innerer Klemmkörper
- 8: äußerer Klemmkörper
- 9: äußere Mantelfläche
- 10: Freiraum
- 11: Trichter
- 12: Lippe
- 13: Außengewinde
- 14: Sechskant
- 15: Zylinderfläche
- 16: Wulst
- 17: Abschrägung

- α: Öffnungswinkel
- β: Mantelwinkel
- γ: Trichterwinkel
- δ: Schneidlippenwinkel

## Patentansprüche

1. Schlauchverschraubung aus Kunststoff für flexible Schläuche und starre Rohre (5), bestehend aus einem Verschraubungskörper (1 ) mit einem Außengewinde und darauf aufschraubbarer Überwurfmutter (4) und einer inneren Tülle (2), auf die der Schlauch (5) aufschiebbar ist, an welche bodenseitig eine Anschlagringfläche (3) angeformt ist, an die sich ein Stutzen mit einer kegeligen Erweiterung (6) anschließt, in den ein diesen überragendes Klemmelement einführbar ist, das mit der Überwurfmutter (4) zusammenwirkt, mit den folgenden Merkmalen:
a) das Klemmelement besteht aus einem ersten (7) und einem zweiten (8), axial hintereinander angeordneten Klemmkörper,
b) der erste, in Einschubrichtung gesehen vorne angeordnete Klemmkörper (7) weist eine kegelige Mantelfläche, deren Mantelwinkel β größer ist als ein Öffnungswinkel α der kegeligen Erweiterung des Stutzens (6), und
c) an seiner Rückseite einen Trichter (11) auf, gegen den der zweite Klemmkörper (8) anliegt,
d) der zweite Klemmkörper (8) besitzt eine radial einwärts gerichtete Lippe (12).

2. Schlauchverschraubung nach Anspruch 1, **dadurch gekennzeichnet, daß** der äußere Klemmkörper (8) aus Polyetheretherketon (PEEK) gefertigt ist.

3. Schlauchverschraubung nach Anspruch 1, **dadurch gekennzeichnet, daß** der innere Klemmkörper aus Polytetrafluorethylen (PTFE) hergestellt ist.

4. Schlauchverschraubung nach einem der Ansprüche 1 bis 3, **dadurch gekennzeichnet, daß** der Stutzen (6) einen Öffnungswinkel α von etwa 25 - 35° und der innere Klemmkörper einen Mantelwinkel β von etwa 28 - 45° besitzen.

5. Schlauchverschraubung nach einem der Ansprüche 1 bis 4, **dadurch gekennzeichnet, daß** der Trichterwinkel γ des inneren Klemmkörpers (7) etwa 85 - 95° aufweist.

6. Schlauchverschraubung nach einem der Ansprüche 1 bis 5, **dadurch gekennzeichnet, daß** der Schneidlippenwinkel δ etwa 55 - 65° beträgt.

7. Schlauchverschraubung nach einem der Ansprüche 1 bis 6, **dadurch gekennzeichnet, daß** die Lippe (12) des äußeren Klemmkörpers (8) von diesem abgeknickt ist, wobei die Innenfläche des Klemmkörpers zylindrisch ist.

## Claims

1. Screw coupling for hoses of synthetic material for flexible hoses and rigid pipes (5), consisting of q screw coupling body (1) with an outer thread and a union nut (4) screwable thereon and an inner socket (2) on which the tube (5) can be pushed on on which at the bottom a stop annular surface (3) is formed on which is attached a connection piece with a conical widening (6) in which can be inserted a clamping element projecting over this which cooperates with the union nut (4), with the following features:
a) the clamping element consists of a first (7) and a second (8) clamping bodyarranged axially behind one another,
b) the first clamping body (7), seen in the insertion direction, arranged in front has a conical generated surface the surface angle β of which is greater than an opening angle α of the conical widening of the connecting piece (6) and
c) on its rear side lies a funnel (11) lying against the second clamping body (8),
d) the second clamping body (8) possesses a radially inwardly directed lip (12).

2. Screw coupling for hoses according to claim 1, **characterised in that** the outer clamping body (8) is made from polyether ether ketone (PEEK).

3. Screw coupling for hoses according to claim 1, **characterised in that** the inner clamping body is produced from polytetra-fluoroethylene (PTFE).

4. Screw coupling for hoses according to one of claims 1 to 3, **characterised in that** the connecting pieces (6) possess an opening angle α of about 25 - 35° and the inner clamping body has a surface angle β of about 28 - 45°.

5. Screw coupling for hoses according to one of claims 1 to 4, **characterised in that** the funnel angle Y of the inner clamping body (7) has about 85 - 95°.

6. Screw coupling for hoses according to one of claims 1 to 5, **characterised in that** the cutting edge δ amounts to about 55 - 65°.

7. Screw coupling for hoses according to one of claims 1 to 6, **characterised in that** the lip (12) of the outer clamping body (8) is bent from this , whereby the inner surface of the clamping body is cylindrical.

## Revendications

1. Raccord fileté en matière plastique pour tuyaux flexibles et tubes rigides (5), comprenant un corps de raccord (1) muni d'un filetage extérieur et d'un écrou à chapeau (4) vissable sur celui-ci et une douille interne (2) sur laquelle le tuyau (5) peut être glissé et sur laquelle est formée, côté embase, une surface annulaire de butée (3) contiguë à un manchon à évasement conique (6), dans lequel peut être inséré un élément de serrage le dépassant, qui coopère avec l'écrou à chapeau (4), ayant les caractéristiques suivantes :
a) l'élément de serrage est composé d'un premier (7) et d'un deuxième corps de serrage (8) disposés axialement l'un derrière l'autre,
b) le premier corps de serrage (7), disposé devant dans le sens d'insertion, comprend une surface latérale conique dont l'angle β est plus grand qu'un angle d'ouverture α de l'évasement conique du manchon (6) et,
c) sur sa face arrière, un cône (11) contre lequel s'appuie le deuxième corps de serrage (8),
d) ledit deuxième corps de serrage (8) possède une lèvre (12) radialement tournée vers l'intérieur.

2. Raccord fileté selon la revendication 1, **caractérisé en ce que** le corps de serragè extérieur (8) est réalisé en polyétheréther-cétone (PEEK).

3. Raccord fileté selon la revendication 1, **caractérisé en ce que** le corps de serrage intérieur est réalisé en polytétrafluoréthylène (PTFE).

4. Raccord fileté selon l'une des revendications 1 à 3, **caractérisé en ce que** le manchon (6) possède un angle d'ouverture α d'environ 25 - 35° et le corps de serrage intérieur un angle β d'environ 28 - 45°.

5. Raccord fileté selon l'une des revendications 1 à 4, **caractérisé en ce que** l'angle de cône γ du corps de serrage intérieur (7) est d'environ 85 - 95°.

6. Raccord fileté selon l'une des revendications 1 à 5, **caractérisé en ce que** l'angle δ de la lèvre de coupe est d'environ 55 - 65°.

7. Raccord fileté selon l'une des revendications 1 à 6, **caractérisé en ce que** la lèvre (12) du corps de serrage extérieur (8) est infléchie par rapport à celui-ci, la surface intérieure dudit corps de serrage étant cylindrique.
